Europäisches Patentamt

European Patent Office

Office européen des brevets

(19)

(11) Publication number: **0 021 822**
**B1**

(12) **EUROPEAN PATENT SPECIFICATION**

(45) Date of publication of patent specification: **12.09.84**

(51) Int. Cl.³: **C 08 F 10/00, C 08 F 4/64**

(21) Application number: **80302116.1**

(22) Date of filing: **24.06.80**

(54) Titanium trichloride catalytic component and method for homo- or co-polymerization of alpha-olefins.

(30) Priority: **29.06.79 JP 83220/79**

(43) Date of publication of application:
**07.01.81 Bulletin 81/01**

(45) Publication of the grant of the patent:
**12.09.84 Bulletin 84/37**

(84) Designated Contracting States:
**BE DE FR GB NL**

(56) References cited:
**BE-A- 873 124**

**CHEMICAL ABSTRACTS, vol. 88, no. 18, 1st
May 1978, page 17, no. 121933g Columbus,
Ohio, U.S.A.**

(73) Proprietor: **TOYO STAUFFER CHEMICAL CO.
LTD.
7-7, Akasaka 1-chome Minato-ku
Tokyo (JP)**

(72) Inventor: **Sunada, Yoichi
2324-7, Oaza-tonda
Shin-nanyo-shi Yamaguchi-ken (JP)**
Inventor: **Takahashi, Yoshikazu
76 Maruyama-cho
Hikari-shi Yamaguchi-ken (JP)**
Inventor: **Takitani, Masaru
2612-76, Oaza-Fukugawa
Shin-nanyo-shi Yamaguchi-ken (JP)**

(74) Representative: **Smith, Sydney et al
Elkington and Fife High Holborn House 52/54
High Holborn
London WC1V 6SH (GB)**

The file contains technical information
submitted after the application was filed and
not included in this specification

Courier Press, Leamington Spa, England.

# 0 021 822

## Description

This invention relates to the production of a very strong and highly active titanium trichloride catalytic component which is suitable for use in the polymerization of one or more $\alpha$-olefins. The process permits adjustment of the average particle diameter of the catalytic component to a value of from 10 to 500 $\mu$m as desired. The catalytic component has a high degree of uniformity of the particle diameter. This invention also relates to the homo- or co-polymerization of one or more $\alpha$-olefins which is carried out in the presence of a catalytic combination of the titanium trichloride catalytic component and an organo-aluminium compound to give a polymer product having a highly spherical particle shape. Such a catalytic combination is also provided. By means of the present invention, one may either dispense with or simplify the deashing and washing processes generally required in the production of $\alpha$-olefin polymers; facilitate the gas-phase polymerization of an $\alpha$-olefin, in particular propylene, which has been considered difficult; and obviate the necessity of a pelletizing process in the production of the polymer.

A number of processes have been proposed for obtaining a titanium trichloride catalytic component that has a high polymerization activity and is capable of enhancing production of a stereospecific polymer. However, almost all of the catalytic components obtainable according to the prior art are in a powdery state having uneven particle sizes. Accordingly, the polymer obtained using such a catalytic component has been in a powdery state and has caused production problems because it is difficult to separate, dry and transport. Furthermore, the polymer obtained using such a catalytic component has required pelletization, including melting, kneading, extruding and shaping processes, after drying and before the thus-obtained polymer product is supplied for use in moulding and machining fields. Thus, in an $\alpha$-olefin polymer production plant, the pelletizing processes, which require expensive machinery and consume a significant amount of energy, lower the productivity of the plant. Accordingly, the conventional titanium trichloride catalytic components have many shortcomings. A catalytic component for polymerization giving a polymer that has a highly uniform particle diameter without fine granular polymer would not only enhance the operational efficiency of a polymer production plant, but would also obviate the need for an additional pelletizing process for the polymer product. Such a catalytic component would contribute significantly to the rationalization of the polymer production processes of the plant. Therefore, the development of such an improved catalytic component has been strongly desired.

Recently, there have been developed some granular catalytic components which have a high polymerization activity and give stereospecific polymers at a high rate of productivity. For example, a published Japanese Patent Application No. 47-34478 discloses a method for obtaining a $\delta$-type titanium trichloride having a dark purple colour and a granular shape. In the disclosed process a $\beta$-type titanium trichloride is obtained by reducing titanium tetrachloride at a low temperature using an organo-aluminium compound; the $\beta$-type titanium trichloride is treated with a complexing agent; and then the trichloride is subjected to a heat treatment in a titanium tetrachloride. Furthermore, published Japanese Patent Application Nos. 51-16298, 51-76196 and 53-12796 also disclose a method for obtaining fine granular solid titanium trichlorides using a liquid medium, which is obtained by treating a titanium tetrachloride with an organo-aluminium compound in the presence of an organic ether compound, by contact with a liberating agent, such as Lewis acid, at a temperature below 150°C.

The catalytic component obtainable by such methods is an excellent catalytic component having a high polymerization activity. However, the average particle diameter of the thus-obtained titanium trichloride catalytic component is at the most from 30 to 40 $\mu$m. The particle size of the titanium trichloride catalytic component obtainable by the last-mentioned method is still too small and the catalytic component is difficult to handle because of its poor fluidity and its low bulk density. When an $\alpha$-olefin is polymerized using such a catalytic component, the thus-obtained polymer also has a small particle diameter and low bulk density. Also, the use of such a catalytic component not only results in a low productivity of stereospecific polymer, but also necessitates a pelletizing process because the product is in a powdery state.

A method of reducing a titanium tetrachloride using an organo-aluminium compound in the presence of an olefin also has been disclosed in published Japanese Patent Application No. 52-142691. According to this reference, in reducing titanium tetrachloride with an organo-aluminium compound, a titanium trichloride is allowed to separate while a small amount of propylene is supplied during the reduction and then a further treatment is carried out with a complexing agent and the titanium tetrachloride. However, a catalyst obtained from a combination of a titanium tetrachloride and an organo-aluminium compound is known as a Ziegler catalyst and has been used as a catalyst for the polymerization of olefins. In the light of this, it seems that a low molecular weight olefin polymer produced by the use of the titanium tetrachloride and the organo-aluminium compound serves as a binder causing separated titanium trichloride to coagulate. Therefore, it is thought that, in accordance with this prior art method, the particle diameter of the titanium trichloride cannot be decreased though it may be increased. (This has been confirmed by experiment and is presented below as a Reference Example).

There has also been proposed a titanium trichloride catalytic component, which has a high

2

polymerization activity and a high productivity for a stereospecific polymer, which is obtained by a process which permits control of the particle diameter thereof and hence control of the particle diameter of the olefin polymer produced avoiding the need for a pelletizing process. A process for the homo- or co-polymerization of $\alpha$-olefins in the presence of a catalyst consisting of the titanium trichloride catalytic component and an organo-aluminium compound has also been disclosed. (See Japanese Patent Application Nos. 52-159997 and 53-76168). Efforts have now also been made to obtain a titanium trichloride of greater strength. As a result of this work, it has been discovered that, in allowing a titanium trichloride to separate, carrying out the process in the presence of an olefin, more particularly an $\alpha$-olefin, gives a titanium trichloride catalytic component which has a small particle diameter between 2/3 and 1/2 of that of a catalytic component obtainable in the absence of the olefin during the separating process and which has improved strength. This discovery forms the basis of the present invention. In view of the fact that there exists several percent of an olefin polymer in the titanium trichloride catalytic component, this phenomenon probably results from the polymer serving to solidify the particles of the catalyst in such a way as to make the particles smaller and, at the same time, stronger. This is a significant advantage which is not to be expected from the prior art.

In general terms, the present invention relates to the production of a titanium trichloride catalytic component wherein a mixed solvent having a titanium tetrachloride, an organic ether and an organo-aluminium compound dissolved therein is heated, which heating may be interrupted then, at an arbitrary point in time, either during the heating period or during the temporary cooling period, further organic ether and/or titanium tetrachloride is added; and then heating is effected to a high temperature in the presence of an olefin to separate the titanium trichloride catalytic component.

In accordance with the present invention, the mixed solvent having a titanium tetrachloride, an organic ether and an organo-aluminium compound dissolved therein comprises an aromatic hydrocarbon halide in a saturated aliphatic hydrocarbon and/or an alicyclic hydrocarbon. Another important feature of the present invention is that the separation of the titanium trichloride catalytic component is allowed to take place in the presence of an olefin. Unless this is done, it is impossible to impart great strength to the particles of the titanium trichloride catalytic component and, at the same time, to adjust the particle diameter thereof as desired.

Accordingly, the present invention provides a process for the production of a titanium trichloride catalytic component as spherical particles having a uniform average diameter of from 10 to 500 $\mu$m wherein an organo-aluminium compound, titanium tetrachloride and an organic ether are added to a mixed solvent at a solvent temperature of not more than 55°C, prior to heating the solution of from 45 to 150°C over a period totalling from 10 minutes to 24 hours, the solvent comprising from 20 to 70%, by volume, of an aromatic hydrocarbon halide in a saturated aliphatic hydrocarbon and/or an alicyclic hydrocarbon, characterised in that, during the heating stage, further organic ether and/or titanium tetrachloride is added to the solution and in that an olefin is added to the solution prior to the separation of the titanium trichloride catalytic component from the solution.

The olefin to be used in accordance with the present invention is either a single olefin or a mixture of olefins, the carbon number(s) of which generally do(es) not exceed 6. Such an olefin having a carbon number of not more than 6 may be selected from ethylene, propylene, butylene, pentene and hexene, preferably ethylene, propylene, butene-1 or isobutylene, most preferably ethylene or propylene. When ethylene or propylene is used, it is possible to mix a small amount of hydrogen therewith. As for the manner in which the olefin is to be supplied, it is preferable to have the olefin dissolved beforehand in the mixed solvent in which a titanium tetrachloride, an organic ether and an organo-aluminium compound are dissolved. However, it is also possible continuously to supply the olefin during the reaction. The quantity of olefin used may be determined as desired. The particle diameter of the titanium trichloride catalytic component which separates decreases as the quantity of olefin increases. It is also possible to carry out the separating process under a pressure of the olefin. However, a separation process under a pressure exceeding 0.5 atm does not bring about a particular increase in the effect thereof.

The halogen of the aromatic hydrocarbon halide to be used in accordance with the present invention may be selected from chlorine, bromine, iodine and fluorine. The aromatic hydrocarbon halide may, for example, be selected from chlorinated compounds, such as chloro-benzene, chloro-toluene, chloro-xylene, chloro-ethyl benzene, dichloro-benzene, dichloro-toluene, dichloro-xylene, trichlorobenzene, trichloro-toluene and chloro-bromo-benzene; or brominated aromatic hydrocarbons including bromo-benzene, bromo-toluene, bromo-xylene, bromo-ethyl benzene, dibromo-benzene, dibromo-toluene, dibromo-xylene, tribromo-benzene and tribromo-toluene; preferably from chlorinated and brominated aromatic hydrocarbons including chloro-benzene, chloro-toluene, chloro-xylene, dichloro-benzene, dichloro-toluene, dichloro-xylene, bromo-benzene, bromo-toluene, bromo-xylene, dibromo-benzene, dibromo-toluene and dibromo-xylene.

The saturated aliphatic hydrocarbon to be used in accordance with the present invention may be selected from n-pentane, n-hexane, n-heptane, n-octane and n-decane. Examples of alicyclic hydrocarbon usable in accordance with the present invention may be selected from cyclopentane, cyclohexane, cyclo-heptane, cyclooctane and methyl-cyclohexane.

In one embodiment of the present invention, the particle diameter of the titanium trichloride

3

catalytic component is controlled by adjusting the concentration of the aromatic hydrocarbon halide contained in the mixed solvent. The concentration of the aromatic hydrocarbon halide in the mixed solvent is from 20 to 70%, by volume, preferably from 25 to 65%, by volume, and more preferably from 30 to 60%, by volume. Within this concentration range, the particle diameter of the titanium trichloride catalytic component produced decreases as the concentration of the aromatic hydrocarbon halide increases. Conversely, the particle diameter increases as the concentration of the aromatic hydrocarbon halide decreases. The particle diameter of the produced titanium trichloride catalytic component is nonuniform when the concentration is less than 20%, by volume. In this case, the polymerization activity of the catalytic component and the stereospecificity of the polymer product obtained are also adversely affected to a great degree. On the other hand, when the concentration exceeds 70%, by volume, the particle diameter of the catalytic component becomes so small that the titanium trichloride catalytic component cannot be easily filtered or washed and this lowers the productivity of the catalytic component.

The titanium tetrachloride is generally used in a quantity of less than 5 mol, preferably not exceeding 2 mol, per litre of mixed solvent. On the other hand, there is no particular value for the lower limit. However, it is preferable to use at least 0.01 mol of the titanium tetrachloride in consideration of the productivity of the titanium trichloride catalytic component.

The organic ether usable in accordance with the present invention is preferably a compound corresponding to the following general formula: ROR' wherein R and R', which may be the same or different, each represents alkyl; and at least one of R and R' has a carbon number not exceeding 5. For example, the organic ether may be selected from di-$n$-amyl ether, di-$n$-butyl ether, di-$n$-propyl ether, $n$-amyl-$n$-butyl ether, $n$-amylisobutyl ether, $n$-butyl-$n$-propyl ether, $n$-butylisoamyl ether, $n$-propyl-$n$-hexyl ether and $n$-butyl-$n$-octyl ether. Of these compounds, the use of di-$n$-butyl ether is most effective.

The quantity of the organic ether to be dissolved in the mixed solvent is generally from 0.8 to 3 mol, preferably from 1 to 2.5 mol, per mol of the titanium tetrachloride. When less than 0.8 mol of the organic ether is used per mol of the titanium tetrachloride, the polymerization activity of the titanium trichloride catalytic component and the productivity of a stereospecific polymer decrease. Conversely, the use of more than 3 mol thereof lowers not only the yield of the catalytic component, but also the productivity of a stereospecific polymer.

The organo-aluminium compound usable in accordance with the present invention is preferably an organo-aluminium compound corresponding to the following general formula; $AlR_nX_{3-n}$ wherein R represents $C_1$—$C_{10}$ alkyl; X represents halogen or hydrogen; and n represents a whole number such that $0 < n \leq 3$. The organo-aluminium compound wherein n represents 3, for example, may be selected from: trimethyl aluminium, triethyl aluminium, tri-$n$-propyl aluminium, tri-$n$-butyl aluminium, triisobutyl aluminium, tri-$n$-pentyl aluminium, tri-$n$-hexyl aluminium and tri-$n$-octyl aluminium. The organo-aluminium compound wherein X represents hydrogen may be selected from: dimethyl aluminium hydride, di-ethyl aluminium hydride, di-$n$-butyl aluminium hydride, di-isobutyl aluminium hydride, di-$n$-pentyl aluminium hydride, di-$n$-hexyl aluminium hydride, di-$n$-octyl aluminium hydride, methyl aluminium dihydride, ethyl aluminium dihydride, $n$-butyl aluminium dihydride, isobutyl aluminium dihydride, dipropyl aluminium hydride and propyl aluminium dihydride. The compound wherein X represents halogen may, for example, be selected from: dimethyl aluminium chloride, diethyl aluminium chloride, di-$n$-propyl aluminium chloride, di-$n$-butyl aluminium chloride, diisobutyl aluminium chloride, di-$n$-pentyl aluminium chloride, di-$n$-hexyl aluminium chloride, di-$n$-octyl aluminium chloride, methyl aluminium sesqui-chloride, ethyl aluminium sesqui-chloride, $n$-propyl aluminium sesqui-chloride, $n$-butyl aluminium sesqui-chloride, isobutyl aluminium sesqui-chloride, ethyl aluminium dichloride, $n$-propyl aluminium dichloride, isobutyl aluminium dichloride, $n$-hexyl aluminium dichloride, diisohexyl aluminium chloride and isohexyl aluminium dichloride. Before use, the organo-aluminium compound is preferably diluted to a suitable degree using an aromatic hydrocarbon, such as benzene, toluene or xylene, or using the aromatic hydrocarbon halide, the saturated aliphatic hydrocarbon or the alicyclic hydrocarbon which is used in the preparation of the mixed solvent in accordance with the present invention, or using a mixture thereof. It is most preferable to dilute the organo-aluminium compound with the aromatic hydrocarbon halide. In accordance with the present invention, the organo-aluminium compound is used as a reducing agent for the purpose of reducing a tetravalent titanium to a trivalent titanium. Generally, the addition of such an organo-aluminium compound in quantity equivalent to the tetravalent titanium is sufficient for such a purpose. However, in the presence of the aromatic hydrocarbon halide, the addition of the organo-aluminium compound is inter-related to the particle diameter of the separating titanium trichloride catalytic component. In view of this inter-relation, it is preferable to use an addition of organo-aluminium compound of from 0.3 to 1.8 equivalent relative to the titanium tetrachloride. When the addition of the organo-aluminium compound is less than 0.3 equivalent relative to the titanium tetrachloride, the yield of the titanium trichloride greatly decreases. Conversely, if the addition is in excess of 1.8 equivalent, the polymerization activity and the productivity of the stereospecific polymer is reduced.

Alternatively, the particle diameter may be controlled by adjusting the quantities of the organic ether, the titanium tetrachloride and the organo-aluminium compound. In this instance, it is also essential to have the aromatic hydrocarbon halide present. Without the aromatic hydrocarbon halide, it is hardly possible to adjust the particle diameter of the titanium trichloride as desired.

For example, in cases where the concentrations of the organic ether and the titanium tetrachloride are fixed, the particle diameter of the produced titanium trichloride catalytic component decreases as the addition of the organo-aluminium compound increases. However, the particle diameter conversely increases as the addition of the organo-aluminium compound exceeds a certain limit. This is hardly expected from the conventional methods. However, the addition of the organo-aluminium compound at which the minimal particle diameter is obtainable varies with the mole ratio of the organic ether to the titanium tetrachloride. When the mole ratio of the organic ether to the titanium tetrachloride is decreased, a small addition of the organo-aluminium compound causes the titanium trichloride catalytic component to have the minimal particle diameter. When the concentrations of the titanium tetrachloride and the organo-aluminium compound are fixed, the particle diameter of the catalytic component decreases as the concentration of the organic ether increases.

The organic ether to be added during the heating period or during a temporary cooling period therein may be selected from the above organic ethers. The addition of the organic ether for this purpose is generally not more than 4 mol, preferably less than 3.5 mol, most preferably less than 2.4 mol, per mol of the titanium tetrachloride contained in the mixed solvent. An addition exceeding 4 mol causes coagulation among particles and this results in the formation of a coarse coagulative titanium trichloride catalytic component, which has a reduced capability as a catalytic component for the polymerization of $\alpha$-olefins. Although there is no particular lower limit, no salient effect may be expected from an addition of less than 0.01 mol.

In addition to the above organic ether a titanium tetrachloride may be also added during the heating period or during a temporary cooling period therein. The addition of this titanium tetrachloride is generally at least 0.01 mol, preferably more than 0.02 mol, most preferably more than 0.04 mol, per mol of the titanium tetrachloride which is contained in the mixed solvent. An addition of less than 0.01 mol of the titanium tetrachloride causes the polymer produced to lack transparency.

The time for the addition of the organic ether and/or the titanium tetrachloride during the heating period or during a temporary cooling period therein is as follows: After the whole quantity of the organo-aluminium compound is added at a solvent temperature not exceeding 55°C in the presence of from 20 to 70%, by volume, of the aromatic hydrocarbon halide in the mixed solvent, they may be added at an arbitrary point of time during the process of raising the solvent temperature to from 45 to 150°C over a period of from 10 minutes to 24 hours, or during a period of temporary cooling effected after the solvent temperature has been raised to from 40 to 80°C or during further heating again to raise the solvent temperature of from 45 to 150°C after such a temporary cooling period. If the above-mentioned temporary cooling is not effected, it is preferable to add only the organic ether.

The production of the titanium trichloride catalytic component in accordance with the present invention is exemplified below:

In the presence of the olefin, the titanium tetrachloride and the organic ether are dissolved in the mixed solvent either separately or in the form of a mixture or a complex consisting of the titanium tetrachloride and the organic ether. Then, the whole quantity of the organo-aluminium compound is added to the mixed solvent. However, where temporary cooling is to be carried out, the addition of the organo-aluminium compound may be effected in portions. The organo-aluminium compound to be added is preferably prepared by allowing it to absorb the olefin beforehand. The temperature of the mixed solvent is adjusted to a temperature of not more than 55°C at the time of the addition of the organo-aluminium compound, because if the organo-aluminium compound is added at a temperature exceeding 55°C, the titanium tetrachloride would immediately be reduced causing a fine granular titanium trichloride catalytic component to separate and this would not only make adjustment of the particle size difficult, but would also reduce productivity because of difficulty in carrying out filtration and washing of the catalytic component. After the addition of the organo-aluminium compound, the temperature of the mixed solvent is raised to from 45 to 150°C, preferably from 65 to 120°C, more preferably from 75 to 110°C. The period over which the temperature is to be raised to the desired temperature is from 10 minutes to 24 hours, preferably from 30 minutes to 12 hours, more preferably from 1 to 8 hours. The heating must be carried out over the prescribed period to obtain a titanium trichloride catalytic component that has a spherical particle shape and a highly uniform particle diameter. If the temperature of the mixed solvent is suddenly raised at the time of the addition of the organo-aluminium compound within a short period of time of, say, less than 10 minutes, the separating titanium trichloride particles would coagulate into an uneven state. Conversely, heating over a long period of time of, say, exceeding 24 hours, would not give a particularly increased effect.

When the temperature of the mixed solvent is less than 45°C, the velocity of the reduction is too slow for attaining satisfactory productivity. Conversely, the upper limit for the temperature of the mixed solvent must be below the boiling point of the compound that has the lowest boiling point among the saturated aliphatic hydrocarbon, the alicyclic hydrocarbon and the aromatic hydrocarbon halide employed. Therefore, the temperature is not raised above 150°C.

As for the organic ether that is to be added during the heating, it is generally added to the mixed solvent when the temperature of the latter is from 40 to 55°C. A catalytic component obtained with the organic ether added at a mixed solvent temperature not within the above-stated range would tend to cause a polymer product to lack transparency and would also make it hardly possible to obtain a polymer having a truly spherical particle shape. Although not essential, after the heating the temperature is preferably maintained for a period of from several minutes to several hours.

The olefin may be present until completion of the above reaction. However, the purpose of the present invention may be fulfilled with the olefin present until the titanium trichloride is completely separated.

By the above-stated procedures, there is obtained a truly spherical titanium trichloride catalytic component having highly uniform particle size with the average particle diameter arbitrarily adjusted to a value of from 10 to 500 $\mu$m. The thus-obtained titanium trichloride catalytic component is generally thoroughly washed in a conventional manner with a hydrocarbon solvent or an aromatic hydrocarbon halide solvent and may then be stored either in a slurry state or in a state of a dry product obtained by filtration and drying processes.

The titanium trichloride catalytic component produced in this manner may be used as a catalyst for the polymerization of $\alpha$-olefins together with an organo-aluminium compound corresponding to the following general formula: $AlR_nX_{3-n}$ wherein R represents alkyl; X represents halogen; and n represents a whole number such that $0<n\leq3$. This organo-aluminium compound may be selected from: triethyl aluminium, diethyl aluminium chloride, ethyl aluminium dichloride, ethyl aluminium sesqui-chloride, triisobutyl aluminium and diisobutyl aluminium chloride.

The ratio of the titanium trichloride catalytic component to the organo-aluminium compound may be within a wide range easily determined by those skilled in the art. However, the mole ratio is normally 1:1~20. Furthermore, an electron donor which is generally used may be used in combination with the catalyst in carrying out the present $\alpha$-olefin polymerization process. The polymerization may be carried out by a suspension polymerization process in which an inert hydrocarbon, such as an aromatic hydrocarbon selected, for example, from benzene, toluene and xylene, an aliphatic hydrocarbon selected, for example, from hexane, heptane and octane, or an alicyclic hydrocarbon selected, for example, from cyclohexane and cycloheptane, is employed as solvent or by a liquid phase polymerization process in which a liquified monomer is employed as solvent.

When the titanium trichloride catalytic component is used in a gas phase polymerization process, the uniform particle diameter of the titanium trichloride catalytic component facilitates stirring using a gas flow, for example. The particles of the catalytic component are hardly caused to decay by abrasion, for example, because of the excellent strength of the catalytic components. At the high polymerization activity and the high stereospecific polymer productivity of the catalytic component, the polymer which is produced and taken out of a polymerization tank may be supplied as it is for machining and moulding applications. The polymer production processes may thus be rationalized to a great extent. This is one of the advantages of the present invention.

As for the mode of polymerization, the polymerization may be carried out either continuously or batch-wise. The polymerization temperature is generally from 30 to 120°C, preferably from 50 to 100°C. The polymerization pressure is generally from atmospheric pressure to 100 at, preferably from atmospheric pressure to 50 at (1 at=0.909 bar).

Examples of the $\alpha$-olefins which may be either homo- or co-polymerized using the catalyst according to the present invention include ethylene, propylene, butene-1 and 4-methyl pentene-1. The molecular weight of the polymer may be adjusted in known manner using hydrogen or diethyl zinc.

When the titanium trichloride catalytic component is employed in polymerizing an $\alpha$-olefin in accordance with the present invention, the polymerization activity of the catalytic component is extremely high and the polymer produced has a high degree of stereospecificity and a high bulk density.

The particle size of the titanium trichloride catalytic component may be adjusted to obtain a polymer having a highly uniform particle diameter of from 0.3 to 8 mm. The thus-obtained polymer has an almost truly spherical particle shape, transparency and excellent fluidity. Despite the large particle diameter thereof, the thus-obtained polymer has an excellent deashing property.

The following Examples illustrate the present invention. Hereinafter, the following symbols are used:

a: The number of g of the polymer produced (g-pp, g-pp . g-cat-hr-atm) in unit time, at unit pressure (atm), and per g of the catalytic component (g-cat.) employed.

P: The number of g of the polymer produced (g-pp/g-cat.) per g of the catalytic component.

$$HI: \frac{\text{boiling } n\text{-heptane-insoluble matter (g) in solid polymer produced}}{\text{solid polymer produced}} \times 100\ (\%)$$

$$II. \frac{\text{solid polymer produced (g)} \times HI}{\text{solid polymer produced (g)} + \text{polymer (g) soluble in polymerization solvent}}\ (\%)$$

6

Dc: The average particle diameter ($\mu$m) obtained by measuring the diameters of 50 particles using a microscope and then by averaging the measured values.

$\rho$: The bulk density of the solid polymer produced (g/ml) as measured in accordance with ASTM-D-1895-69 method A or B.

Dp: The average particle diameter of the polymer produced ($\mu$m).

G-2 or G-3 glass filter is respectively a glass filter madcat glass manufactured by Kokura Glass Industrial Co. Ltd. which shows 40~5 $\mu$m or 80~30 $\mu$m at average diamater in minute openings thereof.

Example 1:

Production of the titanium trichloride catalytic component:

A 500 ml flask equipped with a stirrer was filled with propylene. Then, 250 ml of a monochloro-benzene/n-heptane mixed solvent containing 33%, by volume, of monochloro-benzene as the aromatic hydrocarbon halide was introduced into the flask. Following the addition of the monochloro-benzene, 24.2 ml of titanium tetrachloride (0.22 mol, corresponding to 0.88 mol of $TiCl_4$ per litre of the mixed solvent) was added.

While this mixed solvent was maintained at a temperature of from 20 to 23°C with stirring, 46.4 ml of di-n-butyl ether (0.28 mol), was dropped in over a period of 10 minutes, the mole ratio of the di-n-butyl ether to the titanium tetrachloride corresponding to 1.3:1. Then a solution prepared by dissolving 13.8 ml of diethyl aluminium chloride (0.11 mol) in 50 ml of monochloro-benzene was dropped in over a period of 40 minutes, the equivalent ratio of the diethyl aluminium chloride to the titanium tetrachloride being 1.0:1. The mixed solvent was heated at an average rate of 0.5C°/min. When the temperature of the mixed solvent reached 55°C, 10.1 ml of di-n-butyl ether (0.06 mol) was dropped in over a period of 20 minutes, the mole ratio of the di-n-butyl ether to the titanium tetrachloride corresponding to 0.27:1. The temperature of the mixed solvent was 65°C when the addition of the di-n-butyl ether was completed. Then, when the temperature of the mixed solvent reached 70°C, the introduction of propylene was stopped and nitrogen was introduced. The temperature was then further raised to 90°C and the mixed solvent was maintained at that temperature for a period of 30 minutes. After that, the mixed solvent was cooled to 40°C and then thus-obtained separated matter was filtered under a dry nitrogen atmosphere using a G-2 glass filter. The thus-obtained filter cake was washed twice using 100 ml of monochloro-benzene and three times using 200 ml of n-hexane. No fine granular titanium trichloride catalytic component was found in the washing solvent having passed through the G-2 glass filter. The washed cake was dried under reduced pressure to obtain 40 g of titanium trichloride catalytic component having a highly uniform particle diameter averaging 350 $\mu$m. The thus-obtained titanium trichloride catalytic component was analyzed as follows: 26.8 wt% of Ti, 61.0 wt% of Cl, 0.2 wt% of Al, 8.8 wt% of di-n-butyl ether and 2.3 wt% of a polymer; and the specific surface area measured by the BET method was 138 $m^2$/g.

Polymerization:

A 1 litre flask was dried and then flushed with dry nitrogen. Then, 400 ml of n-heptane, 100.0 mg of the above titanium trichloride catalytic component and 1.6 mmol of diethyl aluminium chloride were placed in the flask. The nitrogen in the polymerization flask was then replaced with propylene. While the pressure of the propylene was maintained at 2.0 kg/cm²G, polymerization was carried out, with stirring, for 2.5 hours at 70°C.

Upon completion of polymerization, stirring and the introduction of the propylene were stopped. After unreacted propylene was purged, the catalyst was decomposed by supplying 100 ml of an alcohol mixture consisting of isopropanol and methanol in a ratio of 1:3. The thus-produced solid polymer was removed by filtration, washed and dried to give 63 g of polypropylene of a truly spherical shape. Meanwhile, 1.0 g of polypropylene which was dissolved in the polymerization solvent was recovered by solidifying polypropylene in the filtrate by evaporation. The results of the polymerization were as shown in Table 1 below.

Example 2:

A 500 ml flask, equipped with a stirrer, was flushed with propylene. Then, 300 ml of a monochlorobenzene/n-heptane mixed solvent containing 45%, by volume, of monochloro-bezene was introduced into the flask. 24.21 ml of titanium tetrachloride and 55.6 ml of di-n-butyl ether were also added. The mixed solvent was maintained at a temperature of from 20 to 23°C and a solution prepared by dissolving 18.8 ml of diethyl aluminium chloride in 50 ml of monochloro-benzene was dropped in over a period of 40 minutes. The mixed solvent was heated at an average rate of 0.5C°/min. When the temperature of the mixed solvent reached 70°C, the mixed solvent was immediately cooled to 20°C and 20.3 ml of di-n-butyl ether and 9 ml of titanium tetrachloride were further dropped in respectively over periods of 15 minutes. Following these additions, the mixed solvent was heated to 75°C at an average rate of 0.7C°/min. The mixed solvent was then maintained at that temperature for 1 hour. During this heating, the introduction of the propylene was stopped and nitrogen was introduced when the temperature of the mixed solvent reached 70°C. After that, the temperature was reduced to 40°C.

Then, separated matter was filtered off using a G-3 glass filter under a nitrogen atmosphere. The thus-obtained filter cake was washed five times with 200 ml of *n*-hexane. No fine granular titanium trichloride catalytic component was found in the washing solvent having passed through the G-3 glass filter.

After washing, the cake was dried under reduced pressure to obtain 41 g of a titanium trichloride catalytic component having a highly uniform truly spherical particle shape and having a particle diameter averaging 20 $\mu$m.

The thus-obtained titanium trichloride catalytic component was used in carrying out a polymerization of propylene by the polymerization process illustrated in Example 1. The results are shown in Table 1 below.

Comparison Example 1:

A titanium trichloride catalytic component was prepared as described in Example 1, with the exception that the propylene was not present. As a result, there were obtained 36 g of a titanium trichloride catalytic component which did not pass through the G-2 glass filter and 3.7 g of a titanium trichloride catalytic component which passed through the G-2 glass filter. The ratio of the titanium trichloride catalytic component which decayed to a fine granular state to the whole titanium trichloride catalytic component was 9.3 wt%.

The thus-obtained titanium trichloride catalytic component was used in carrying out a polymerization of propylene as described in Example 1. The results are shown in Table 1 below.

Comparison Example 2:

A titanium trichloride catalytic component was prepared as described in Example 2, with the exception that the propylene was not present. As a result, there were obtained 37 g of a titanium trichloride catalytic component which did not pass through the G-3 glass filter and 4.2 g of a fine granular titanium trichloride catalytic component which passed through the G-3 glass filter. The ratio of the titanium trichloride catalytic component which decayed to a fine granular state to the whole titanium trichloride catalytic component was 10.2 wt%.

The titanium trichloride catalytic component obtained in this manner was used in carrying out a polymerization of propylene as described in Example 1. The results are as shown in Table 1 below.

As is apparent from the results of Examples 1 and 2 and those of Comparison Examples 1 and 2, the production of the titanium trichloride catalytic component in the presence of propylene increases the strength of the particles of the titanium trichloride catalytic component. Therefore, this production increased the yield of the titanium trichloride catalytic component by about 10 percent.

Example 3:

The titanium trichloride catalytic component was prepared as illustrated in Example 2, with the exception that 250 ml of a monochloro-benzene/*n*-hexane mixed solvent containing 30%, by volume, of monochlorobenzene and 60 ml of monochlorobenzene used in diluting diethyl aluminium chloride were used. Then, a polymerization of propylene was carried out using this titanium trichloride catalytic component as illustrated above. The results are as shown in Table 1 below.

Example 4:

The titanium trichloride catalytic component was prepared as described in Example 2, with the exception that 250 ml of a monochloro-benzene/*n*-hexane mixed solvent containing 30%, by volume, of monochloro-benzene was used and 70 ml of monochloro-benzene used in diluting diethyl aluminium chloride were used. The mixed solvent and the diethyl aluminium chloride solution were cooled to 5°C and the diethyl aluminium chloride solution was also allowed to absorb propylene. Then, a polymerization of propylene was carried out in the above manner using this titanium trichloride catalytic component. The results are as shown in Table 1 below.

Example 5:

The titanium trichloride catalytic component was prepared as illustrated in Example 1, with the exception that the propylene used in Example 1 was replaced with ethylene. Using this catalytic component, a polymerization of propylene was carried out as illustrated in Example 1. The results are as shown in Table 1 below.

Example 6:

The titanium trichloride catalytic component was prepared and polymerization of propylene was carried out as illustrated in Example 1, with the exception that, in the preparation of the catalytic component, the propylene used in Example 1 was replaced with butene-1. The results are as shown in Table 1 below.

Example 7:

The titanium trichloride catalytic component was prepared and polymerization pf propylene was carried out as illustrated in Example 1, with the exception that, in the preparation of the titanium trichloride catalytic component, the propylene used in Example 1 was replaced with isobutylene. The results are as shown in Table 1 below.

TABLE 1
Results of polymerization

| Example No. | Dc | a | II | $\rho$ | Dp |
|---|---|---|---|---|---|
| 1 | 350 | 84 | 95.6 | 0.45 | 2,180 |
| 2 | 20 | 86 | 96.3 | 0.48 | 280 |
| 3 | 20 | 99 | 97.5 | 0.52 | 290 |
| 4 | 11 | 105 | 97.7 | 0.52 | 150 |
| 5 | 340 | 85 | 95.0 | 0.45 | 2,150 |
| 6 | 400 | 83 | 94.9 | 0.44 | 2,250 |
| 7 | 420 | 83 | 94.8 | 0.43 | 2,290 |
| Comparison 1 | 510 | 83 | 94.7 | 0.43 | 3,800 |
| Comparison 2 | 15 | 87 | 95.8 | 0.40 | 180 |

Examples 8 to 10:

The titanium trichloride catalytic component was prepared and polymerization of propylene was carried out as illustrated in Example 1, with the exception that, in the preparation of the titanium trichloride catalytic component, the composition of the mixed solvent, consisting of the monochlorobenzene and the n-heptane used in Example 1, was varied as shown in Table 2 below. The results are as shown in Table 2 below.

TABLE 2:

| | Preparation of catalytic component | Results of polymerization | | | | |
|---|---|---|---|---|---|---|
| Example No. | Concentration of chlorobenzene, %, by volume | Dc | a | II | $\rho$ | Dp |
| 8 | 30 | 630 | 73 | 92.5 | 0.42 | 2,980 |
| 9 | 40 | 210 | 83 | 93.5 | 0.40 | 1,890 |
| 10 | 50 | 15 | 88 | 94.7 | 0.43 | 190 |

Examples 11 to 13:

In each of these Examples, the titanium trichloride catalytic component was prepared and polymerization of propylene was carried out as illustrated in Example 1, with the exception that, in the preparation of the titanium trichloride catalytic component, the addition of the diethyl aluminium chloride was varied as shown in Table 3 below. The results are as shown in Table 3 below.

TABLE 3:

| | Preparation of catalytic component | Results of polymerization | | | | |
|---|---|---|---|---|---|---|
| Example No. | Diethyl aluminium chloride/TiCl$_4$ equivalent ratio | Dc | a | II | $\rho$ | Dp |
| 11 | 0.4 | 20 | 55 | 92.8 | 0.40 | 250 |
| 12 | 1.4 | 40 | 60 | 91.5 | 0.39 | 440 |
| 13 | 1.7 | 120 | 39 | 92.8 | 0.37 | 970 |

Examples 14 to 17:

In each of Examples 14 to 17, the titanium trichloride component was prepared and polymerization of propylene was carried out as illustrated in Example 1, with the exception that, in the preparation of the catalytic component, the addition of the di-$n$-butyl ether was varied as shown in Table 4 below. The results are as shown in Table 4 below.

TABLE 4:

| | | Preparation of catalytic component | | Results of polymerization | | | |
|---|---|---|---|---|---|---|---|
| Example No. | di-$n$-butyl ether/ TiCl$_4$ mole ratio | Dc | a | II | $\rho$ | Dp |
| 14 | 1.0 | 200 | 64 | 92.8 | 0.40 | 1,880 |
| 15 | 1.5 | 40 | 66 | 92.7 | 0.41 | 460 |
| 16 | 2.0 | 35 | 70 | 92.5 | 0.40 | 410 |
| 17 | 2.5 | 30 | 67 | 91.0 | 0.35 | 360 |

Examples 18 to 22:

In each of Examples 18 to 22, the titanium trichloride catalytic component was prepared and polymerization of propylene was carried out as illustrated in Example 1, with the exception that the $n$-heptane used in the preparation of the catalytic component was replaced by various saturated aliphatic hydrocarbons or alicyclic hydrocarbons as shown in Table 5 below. The results are as shown in Table 5 below.

TABLE 5:

| | Preparation of catalytic component | | Results of polymerization | | | |
|---|---|---|---|---|---|---|
| Example No. | Saturated aliphatic or alicyclic hydrocarbons | Dc | a | II | $\rho$ | Dp |
| 18 | $n$-hexane | 110 | 80 | 94.2 | 0.41 | 930 |
| 19 | cyclohexane | 120 | 79 | 92.0 | 0.39 | 950 |
| 20 | $n$-octane | 320 | 83 | 94.8 | 0.38 | 2,050 |
| 21 | methyl cyclohexane | 280 | 81 | 95.5 | 0.38 | 1,950 |
| 22 | n-decane | 340 | 78 | 95.0 | 0.37 | 2,150 |

Examples 23 to 30:

In each of these Examples, the titanium trichloride catalytic component was prepared and polymerization of propylene was carried out as illustrated in Example 1, with the exception that, in the preparation of the catalytic component, various aromatic hydrocarbon halides were used as shown in Table 6 below in place of the monochloro-benzene used in Example 1. The results are as shown in Table 6 below.

10

## 0 021 822

TABLE 6:

| | Preparation of catalytic component | | | Results of polymerization | | | |
|---|---|---|---|---|---|---|---|
| Example No. | Aromatic hydrocarbon halides | Dc | a | II | $\rho$ | Dp |
| 23 | Ortho-chloro-toluene | 350 | 82 | 96.0 | 0.38 | 2,400 |
| 24 | 1,2,4-trichloro-benzene | 210 | 84 | 95.8 | 0.40 | 1,340 |
| 25 | Ortho-dichloro-toluene | 260 | 84 | 96.0 | 0.40 | 1,770 |
| 26 | Para-chloro-toluene | 320 | 82 | 95.5 | 0.40 | 2,300 |
| 27 | Bromo-benzene | 300 | 83 | 93.5 | 0.35 | 2,070 |
| 28 | Bromo-toluene | 180 | 76 | 91.0 | 0.35 | 1,660 |
| 29 | Iodo-benzene | 210 | 80 | 91.5 | 0.36 | 1,620 |
| 30 | Fluoro-benzene | 220 | 72 | 92.8 | 0.40 | 1,910 |

Examples 31 to 33:

In each of these Examples, the titanium trichloride catalytic component was prepared and polymerization of propylene was carried out as illustrated in Example 1, with the exception that, in the preparation of the catalytic component, various organic ethers were used as shown in Table 7 below in place of the di-$n$-butyl ether used in Example 1. The results are as shown in Table 7 below.

TABLE 7:

| | Preparation of catalytic component | | | Results of polymerization | | | |
|---|---|---|---|---|---|---|---|
| Example No. | Organic ether compound | Dc | a | II | $\rho$ | Dp |
| 31 | Diethyl ether | 75 | 48 | 90.5 | 0.35 | 620 |
| 32 | di-$n$-propyl ether | 100 | 72 | 93.5 | 0.40 | 900 |
| 33 | di-$n$-amyl ether | 110 | 71 | 93.6 | 0.40 | 940 |

Examples 34 to 38:

In each of these Examples, the titanium trichloride catalytic component was prepared and polymerization of propylene was carried out as illustrated in Example 1, with the exception that, in the preparation of the catalytic component, various organo-aluminium compounds were used as shown in Table 8 below in place of the diethyl aluminium chloride used in Example 1. The results are as shown in Table 8 below.

11

# O 021 822

### TABLE 8:

| | Preparation of catalytic component | | | Results of polymerization | | | |
|---|---|---|---|---|---|---|---|
| Example No. | Organo-aluminium compounds | Dc | a | II | $\rho$ | Dp |
| 34 | DEAL-H see note 1 | 350 | 83 | 96.5 | 0.39 | 2,150 |
| 35 | DIBAL-H see note 2 | 350 | 81 | 96.8 | 0.38 | 2,160 |
| 36 | EASC see note 3 | 20 | 80 | 96.0 | 0.38 | 280 |
| 37 | EADC see note 4 | 20 | 74 | 96.1 | 0.39 | 270 |
| 38 | DIBAC see note 5 | 310 | 80 | 95.6 | 0.36 | 2,050 |

Notes 1. DEAL-H: Diethyl aluminium hydride
2. DIBAL-H: Diisobutyl aluminium hydride
3. EASC: Ethyl aluminium sesqui-chloride
4. EADC: Ethyl aluminium dichloride
5. DIBAC: Diisobutyl aluminium chloride

Examples 39 to 46:

In each of these Examples, the titanium trichloride catalytic component was prepared and polymerization of propylene was carried out as illustrated in Example 2, with the exception that, in the preparation of the catalytic component, the quantity of the monochloro-benzene and $n$-hexane mixed solvent containing 30%, by volume, of monochloro-benzene and that of the monochloro-benzene which diluted the diethyl aluminium chloride were respectively changed to 250 ml and 60 ml and that the quantities of the di-$n$-butyl ether and the titanium tetrachloride to be added during the temporary cooling period were changed as shown in Table 9 below. The results are as shown in Table 9 below.

### TABLE 9:

| | Preparation of catalytic component | | | Results of polymerization | | | |
|---|---|---|---|---|---|---|---|
| Example No. | di-$n$-butyl ether addition, ml | TiCl$_4$ addition, ml | Dc | a | II | $\rho$ | Dp |
| 39 | 0.4 | 9 | 25 | 90 | 93.5 | 0.49 | 360 |
| 40 | 18.8 | 9 | 21 | 95 | 97.0 | 0.52 | 300 |
| 41 | 88.6 | 9 | 19 | 97 | 95.8 | 0.40 | 280 |
| 42 | 20.3 | 4.4 | 20 | 95 | 95.7 | 0.48 | 290 |
| 43 | 20.3 | 17.6 | 21 | 97 | 98.2 | 0.53 | 290 |
| 44 | 20.3 | 33.0 | 20 | 93 | 98.7 | 0.53 | 280 |
| 45 | 13.5 | 8.8 | 23 | 98 | 96.7 | 0.51 | 330 |
| 46 | 33.7 | 22.0 | 20 | 99 | 98.0 | 0.52 | 290 |

Example 47:

A 2 litre stainless steel autoclave equipped with a stirrer, was purged with dry nitrogen. Then, 45.0 mg of a titanium trichloride catalytic component prepared as illustrated in Example 3 and 4 mmol of diethyl aluminium chloride were placed in the autoclave. 100 mmol of hydrogen and 500 g of liquified propylene were supplied to the autoclave under pressure and polymerization was carried out at 80°C for 1 hour. After 1 hour, heating and stirring were stopped and unreacted propylene was purged to obtain 162 g of a polymer. The results of the polymerization were as follows: a: 96.6, P: 3,600, HI: 96.0, $\rho$: 0.50, and Dp: 950.

Example 48:

Anatactic polypropylene was extracted using boiling $n$-heptane. Following this, drying,

12

classification and deoxidation were carried out to obtain 50 g of a stereospecific polypropylene. The thus-obtained 50 g of stereospecific polypropylene was placed in a 2 litre stainless steel autoclave which had previously been flushed with dry nitrogen. Then, 41.0 mg of a titanium trichloride catalytic component prepared as illustrated in Example 3 and 10 ml of $n$-heptane containing 4 mmol of diethyl aluminium chloride were placed within the autoclave. The internal temperature of the autoclave was adjusted to 70°C and then supply of propylene was started to carry out gas phase polymerization thereof. After the polymerization was carried on for 2 hours under a pressure of 25 kg/cm²G, stirring, heating and the supply of propylene were stopped. Unreacted propylene was purged to obtain 205 g of polypropylene. The results of the polymerization were: a: 72.7, P: 5,000, HI: 92.0, $\rho$: 0.42, and Dp: 780.

Example 49:
1 litre of $n$-heptane, 5 mmol of diethyl aluminium chloride and 47.0 mg of a titanium trichloride catalytic component prepared as illustrated in Example 3 were placed in a 2 litre stainless steel autoclave, equipped with a stirrer.
After heating the autoclave to an internal temperature of 70°C, an ethylene/propylene gas mixture containing 5.2%, by volume, of ethylene was introduced into the autoclave under a pressure of 10 kg/cm²g to carry out polymerization for 2 hours. Heating, stirring and the introduction of the gas mixture were stopped after 2 hours and unreacted gas mixture was purged. Then, the contents of the autoclave were filtered, washed and dried to obtain 155 g of a polymer. The thus-obtained polymer was analyzed by infra-red absorption spectroscopy to find that the polymer contained 3.5% of polyethylene.
The results of the polymerization were: a: 150, P: 3,300, II: 73.0 and $\rho$: 0.32.

Example 50:
A 5 litre stainless steel autoclave, equipped with a stirrer, was purged with dry nitrogen. Then, 55.0 mg of a titanium trichloride catalytic component prepared as illustrated in Example 3 and 4 mmol of diethyl aluminium chloride were placed in the autoclave. Then, the pressure within the autoclave was reduced to 10 mmHg. Hydrogen was supplied up to 0.1 kg/cm²g. Then, 940 g of propylene was supplied under pressure. Polymerization was carried out at an internal temperature of 70°C for 2 hours. After 2 hours, the internal temperature was reduced to 60°C and 46 g of ethylene were supplied under pressure. The polymerization was carried on for a further 2 hours and then heating and stirring were stopped and the unreacted monomer was purged to obtain 648 g of a polymer. This polymer was analyzed by infra-red absorption spectroscopy to find that the polymer contained 3.5%, by weight, of polyethylene. The results of the polymerization were: P: 11,780, HI: 88.7 and $\rho$: 0.45.

Examples 51 and 52:
In each of these Examples, the titanium trichloride catalytic component was prepared and propylene was polymerized as illustrated in Example 2, with the exception that, in the preparation of the catalytic component, the addition of the di-$n$-butyl ethyl ether and the titanium tetrachloride during the temporary cooling period was replaced with the addition of a complex consisting of di-$n$-butyl ether and titanium tetrachloride in the mole ratio of 1:1. The results are as shown in Table 11 below.

TABLE 11:

| | Preparation of catalytic component | | Results of polymerization | | | |
|---|---|---|---|---|---|---|
| Example No. | Addition of complex (mol) | Dc | a | II | $\rho$ | Dp |
| 51 | 0.08 | 23 | 94 | 96.5 | 0.45 | 310 |
| 52 | 0.20 | 21 | 92 | 96.3 | 0.45 | 290 |

Examples 53 to 55:
In each of these Examples, the titanium trichloride catalytic component was prepared and propylene was polymerized as illustrated in Example 2, with the exception that, in the preparation of the catalytic component, the process of dropping in di-$n$-butyl ether and the titanium tetrachloride over the periods of 15 minutes respectively during the temporary cooling period in Example 2 was replaced by a process in which di-$n$-butyl ether and titanium tetrachloride were dropped in simultaneously over a period of 15 minutes in quantities as shown in Table 12 below. The results are as shown in Table 12 below.

TABLE 12:

| | | Preparation of catalytic component | | | Results of polymerization | | | |
|---|---|---|---|---|---|---|---|---|
| Example No. | di-*n*-butyl ether addition, ml | TiCl$_4$ Addition ml | Dc | a | II | $p$ | Dp |
| 53 | 20.3 | 9 | 19 | 97 | 97.6 | 0.52 | 300 |
| 54 | 20.3 | 17.6 | 20 | 97 | 98.0 | 0.53 | 300 |
| 55 | 33.7 | 22.0 | 20 | 98 | 98.0 | 0.52 | 310 |

Example 56:

About 0.01 g of a titanium trichloride catalytic component was interposed between the sample plates in a sample plate arrangement consisting of upper and lower disc-shaped glass plates measuring 13 mm in diameter, the upper one measuring 3 mm and the lower one measuring 5 mm in thickness, respectively. Then a cylindrical body made of alumina measuring 13 mm in diameter and 20 mm in thickness was placed on top of the pair of plates in such a way as to disperse an impact and, to stabilize the arrangement, they were set in a cylinder which had its upper part open.

A steel ball measuring 11.9 mm in diameter and weighing 6.87 g was allowed to fall on the arrangement. Then, the catalytic component placed in between the sample plates were examined by means of a microscope to find whether or not the particles of titanium trichloride catalytic component were crushed. When no particle was crushed, the steel ball was allowed to fall from a point 0.5 cm higher. This was repeated until crushed particles were observed. To indicate the results of this test, the highest point that did not cause crushing of the particles was expressed in cm as a parameter expressing the strength of the particles of the catalytic component.

The whole test was carried out under a dry nitrogen atmosphere. The test was applied not only to each titanium trichloride catalytic component obtained in accordance with the present invention, but also to other titanium trichloride catalytic components for the sake of comparison. One such comparison sample was prepared in accordance with a method (which hereinafter will be referred to as the method of published Japanese Patent Application No. 47-34478), wherein a β-type titanium trichloride was obtained by lowering the temperature of titanium tetrachloride and by reducing it with an organo-aluminium compound and then subjecting the thus-obtained titanium trichloride to a heat treatment which was carried out in titanium tetrachloride.

Another comparison sample was prepared in accordance with a method (which hereinafter will be referred to as the method of Japanese Patent Application No. 52-159997), wherein, in separating a titanium trichloride catalytic component from a solution of a saturated aliphatic hydrocarbon and/or an alicyclic hydrocarbon in which titanium tetrachloride, an organic ether compound and an organo-aluminium compound were dissolved, the above-stated organo-aluminium compound was added at a solvent temperature not exceeding 55°C in the presence of from 20 to 70%, by volume, of an aromatic hydrocarbon halide included in the mixed solvent; and, after the addition, the solvent temperature was raised to a temperature of from 45 to 150°C over a period of from 10 minutes to 24 hours. Each of these samples of catalytic components measured 20 μ average particle diameter.

The results of the test which are shown below indicate that the present titanium trichloride catalytic component also excels in strength:

The present titanium trichloride catalytic component:      14.0

A catalytic component obtained in accordance with the method of published Japanese Patent Application No. 47—34478:      9.5

A catalytic component obtained in accordance with the method of Japanese Patent Application No. 52-159997:      8.5

Comparison Examples 3 to 5:

In each of these Comparison Examples, a titanium trichloride catalytic component was prepared as described in each of Examples 8 to 10, with the exception that the mixed solvent used in these Examples was replaced by a monochloro-benzene/toluene mixed solvent. However, as shown in Table 10 below, it was impossible to control the average particle diameter of the resulting catalytic component.

14

# 0 021 822

TABLE 10:

| Comparison Example | Monochloro-benzene, %, by volume | dc |
|---|---|---|
| 3 | 30 | 12 |
| 4 | 40 | 15 |
| 5 | 50 | 11 |

Reference Example 1:

A solid titanium trichloride composite was manufactured in accordance with Example 1 of published Japanese Patent Application No. 52-142691 in the presence of propylene as described below:

A 500 ml flask was flushed with propylene and 150 ml of hexane and 38 ml of $TiCl_4$ were then placed in the flask. Then, with the contents of the flask maintained at 0°C, 44 ml of diethyl aluminium chloride which was diluted with 100 ml of hexane was dropped in over a period of 60 minutes. The introduction of propylene was stopped and nitrogen was introduced at the same temperature for 30 minutes. Then, the temperature was raised to 50°C over a period of 60 minutes and then stirring was further carried on for 2 hours. After the reaction system was left intact at room temperature, the liquid phase portion thereof was separated. The product was washed 5 times with 100 ml of hexane and then was dried under reduced pressure to obtain 75 g of titanium trichloride composite. The average particle diameter was 52 $\mu$ and the particle diameter was uneven because of coagulative crystals.

Reference Example 2:

A titanium trichloride composite was produced as described in Reference Example 1, with the exception that the propylene was replaced with nitrogen. As a result, there was obtained a titanium trichloride composite, which measured 35 $\mu$m in average particle diameter. The particle diameter of the composite was uniform. There was observed no coagulative crystals.

## Claims

1. A process for the production of a titanium trichloride catalytic component as spherical particles having a uniform average diameter of from 10 to 500 $\mu$m wherein an organo-aluminium compound, titanium tetrachloride and an organic ether are added to a mixed solvent at a solvent temperature of not more than 55°C, prior to heating the solution of from 45 to 150°C over a period totalling from 10 minutes to 24 hours, the solvent comprising from 20 to 70%, by volume, of an aromatic hydrocarbon halide in a saturated aliphatic hydrocarbon and/or an alicyclic hydrocarbon, characterised in that, during the heating stage, further organic ether and/or titanium tetrachloride is added to the solution and in that an olefin is added to the solution prior to the separation of the titanium trichloride catalytic component from the solution.

2. A process as claimed in claim 1 wherein the heating stage is interrupted by temporary cooling.

3. A process as claimed in claim 1 or claim 2 wherein the olefin is an aliphatic unsaturated hydrocarbon containing up to 6 carbon atoms.

4. A process as claimed in any of claims 1 to 3 wherein the aromatic hydrocarbon halide is chlorinated aromatic hydrocarbon and/or brominated aromatic hydrocarbon.

5. A process as claimed in any of claims 1 to 4 wherein the organo-aluminium compound corresponds to the following general formula: $AlR_nX_{3-n}$ wherein R represents $C_1$—$C_{10}$ alkyl; X represents halogen or hydrogen; and n represents a whole number such that $0 < n \leq 3$.

6. A process as claimed in any of claims 1 to 5 wherein the organic ether corresponds to the following general formula: ROR', wherein R and R', which may be the same or different, each represents alkyl and at least one of R and R' does not contain more than 5 carbon atoms.

7. A process as claimed in any of claims 1 to 6 wherein the components dissolved in the mixed solvent comprise less than 5 mol of the titanium tetrachloride per litre of mixed solvent; from 0.8 to 3 mol of the organic ether per mol of the titanium tetrachloride; and from 0.3 to 1.8 equivalent of the organo-aluminium compound relative to the titanium tetrachloride.

8. A process as claimed in any of claims 1 to 7 wherein the organic ether is added during the heating stage in a quantity of not more than 4 mol per mol of the titanium tetrachloride contained in the mixed solvent.

9. A process as claimed in any of claims 1 to 8 wherein the titanium tetrachloride is added during the heating stage in a quantity of at least 0.01 mol per mol of the titanium tetrachloride contained in the mixed solvent.

10. A process as claimed in any of claims 1 to 9 wherein the organic ether and/or the titanium tetrachloride added during the heating stage is/are added at a temperature of from 40 to 55°C.

15

11. A process as claimed in any of claims 1 to 10 wherein the heating stage is interrupted by temporary cooling, the organic ether and/or the titanium tetrachloride added during the heating stage is/are added during a period of temporary cooling.

12. A catalyst characterised in that it comprises a titanium trichloride catalytic component produced by a process as claimed in any of claims 1 to 11 and an organo-aluminium compound.

13. A process for the homo- or co-polymerization of an $\alpha$-olefin characterised in that it comprises carrying out the polymerization in the presence of a catalyst as claimed in claim 12.

## Patentansprüche

1. Verfahren zur Herstellung einer katalytischen Titantrichloridkomponente als kugelförmige Teilchen mit einem gleichförmigen durchschnittlichen Durchmesser von 10 bis 500 $\mu$m, bei dem eine Organoaluminiumverbindung, Titantetrachlorid und ein organischer Ether zu einem Mischlösungsmittel bei einer Lösungsmitteltemperatur von nicht mehr als 55°C vor dem Erhitzen der Lösung auf 45 bis 150°C über einen Gesamtzeitraum von 10 Minuten bis 24 Stunden gegeben wird, wobei das Lösungsmittel 20 bis 70 Vol.-% eines aromatischen Kohlenwasserstoffhalogenids in einem gesättigten aliphatischen Kohlenwasserstoff und/oder einem alicyclischen Kohlenwasserstoff enthält, dadurch gekennzeichnet, daß man während der Erhitzungsstufe weiteren organischen Ether und/oder Titantetrachlorid zu der Lösung zusetzt und daß man ein Olefin zu der Lösung vor der Abtrennung der katalytischen Titantrichloridkomponente aus der Lösung zusetzt.

2. Verfahren nach Anspruch 1, dadurch gekennzeichnet, daß man die Erhitzungsstufe durch ein temporäres Abkühlen unterbricht.

3. Verfahren nach Anspruch 1 oder 2, dadurch gekennzeichnet, daß das Olefin ein aliphatischer ungesättigter Kohlenwasserstoff mit bis zu 6 Kohlenstoffatomen ist.

4. Verfahren nach einem der Ansprüche 1 bis 3, dadurch gekennzeichnet, daß das aromatische Kohlenwasserstoffhalogenid ein chlorierter aromatischer Kohlenwasserstoff und/oder bromierter aromatischer Kohlenwasserstoff ist.

5. Verfahren nach einem der Ansprüche 1 bis 4, dadurch gekennzeichnet, daß die Organoaluminiumverbindung der folgenden allgemeinen Formel $AlR_nX_{3-n}$ entspricht, wobei R für $C_1$—$C_{10}$-Alkyl steht, X für Halogen oder Wasserstoff steht und n eine ganze Zahl dahingehend ist, daß $0 < n \leqq 3$.

6. Verfahren nach einem der Ansprüche 1 bis 5, dadurch gekennzeichnet, daß der organische Ether der folgenden allgemeinen Formel ROR' entspricht, wobei R und R', die gleich oder verschieden sein können, jeweils für Alkyl stehen und wobei mindestens einer der Reste R und R' nicht mehr als 5 Kohlenstoffatome enthält.

7. Verfahren nach einem der Ansprüche 1 bis 6, dadurch gekennzeichnet, daß die in dem Mischlösungsmittel aufgelösten Komponenten weniger als 5 mol Titantetrachlorid pro Liter Mischlösungsmittel, 0,8 bis 3 mol organischen Ether pro mol Titantetrachlorid und 0,3 bis 1,8 Äquivalente der Organoaluminiumverbindung bezüglich des Titantetrachlorids enthalten.

8. Verfahren nach einem der Ansprüche 1 bis 7, dadurch gekennzeichnet, daß man den organischen Ether während der Erhitzungsstufe in einer Menge von nicht mehr als 4 mol pro mol des in dem Mischlösungsmittel enthaltenen Titantetrachlorids zusetzt.

9. Verfahren nach einem der Ansprüche 1 bis 8, dadurch gekennzeichnet, daß man das Titantetrachlorid während der Erhitzungsstufe in einer Menge von mindestens 0,01 mol pro mol des in dem Mischlösungsmittel enthaltenen Titantetrachlorids zusetzt.

10. Verfahren nach einem der Ansprüche 1 bis 9, dadurch gekennzeichnet, daß der bzw. das während der Erhitzungsstufe zugesetzte organische Ether und/oder Titantetrachlorid bei einer Temperatur von 40 bis 55°C zugesetzt wird bzw. werden.

11. Verfahren nach einem der Ansprüche 1 bis 10, dadurch gekennzeichnet, daß man die Erhitzungsstufe durch ein temporäres Abkühlen unterbricht und daß der bzw. das während der Erhitzungsstufe zugesetzte Ether und/oder Titantetrachlorid während eines Zeitraums der temporären Abkühlung zugesetzt wird bzw. werden.

12. Katalysator, dadurch gekennzeichnet, daß er eine katalytische Titantrichloridkomponente, hergestellt durch ein Verfahren nach einem der Ansprüche 1 bis 11, und eine Organoaluminiumverbindung enthält.

13. Verfahren zur Homo- oder Copolymerisation eines $\alpha$-Olefins, dadurch gekennzeichnet, daß man die Polymerisation in Gegenwart eines Katalysators nach Anspruch 12 vornimmt.

## Revendications

1. Méthode de production d'un composant catalytique au trichlorure de titane sous forme de particules sphériques ayant un diamètre moyen uniforme de 10 à 500 $\mu$m, dans laquelle on introduit dans un solvant mélangé un composé organo-aluminique, du tétrachlorure de titane et un éther organique à une température du solvant ne dépassant pas 55°C, avant de chauffer la solution de 45 à 150°C sur une période totale de 10 minutes à 24 heures, le solvant comprenant entre 20 et 70%, en volume, d'un halogénure d'hydrocarbure aromatique dans un hydrocarbure aliphatique saturé et/ou un hydrocarbure alicyclique, caractérisée en ce que, pendant l'étape de chauffage, on ajoute à la solution davantage d'éther organique et/ou de tétrachlorure de titane et en ce qu'on ajoute à la solution une oléfine avant la séparation du composant catalytique au trichlorure de titane de la solution.

2. Méthode selon la revendication 1, caractérisée en ce que l'étape de chauffage est interrompue par un refroidissement temporaire.

3. Méthode selon la revendication 1 ou 2, caractérisée en ce que l'oléfine est un hydrocarbure aliphatique insaturé contenant jusqu'à 6 atomes de carbone.

4. Méthode selon l'une quelconque des revendications 1 à 3, caractérisée en ce que l'halogénure d'hydrocarbure aromatique est un hydrocarbure aromatique chloré et/ou un hydrocarbure aromatique bromé.

5. Méthode selon l'une quelconque des revendications 1 à 4, caractérisée en ce que le composé organo-aluminique correspond à la formule générale suivant: $AlR_nX_{3-n}$, dans laquelle R représente un alkyle en $C_1$ $C_{10}$; X représente un halogène ou l'hydrogène; et n représente un nombre entier tel que $0 < n \leq 3$.

6. Méthode selon l'une quelconque des revendications 1 à 5, caractérisée en ce que l'éther organique correspond à la formule générale suivante: ROR', dans laquelle R et R', qui peuvent être identiques ou différents, représentent chacun un alkyle et l'un au moins de R et de R', ne contient pas plus de 5 atomes de carbone.

7. Méthode selon l'une quelconque des revendications 1 à 6, caractérisée en ce que les composants dissous dans le solvant mélangé comprennent moins de 5 moles de tétrachlorure de titane par litre de solvant mélangé; de 0,8 à 3 moles d'éther organique par mole de tétrachlorure de titane; et de 0,3 à 1,8 équivalents de composé organo-aluminque par rapport au tétrachlorure de titane.

8. Méthode selon l'une quelconque des revendications 1 à 7, caractérisée en ce que l'éther organique est ajouté pendant l'étape de chauffage en quantité ne dépassant pas 4 moles par mole de tétrachlorure de titane contenu dans le solvant mélangé.

9. Méthode selon l'une quelcoque des revendications 1 à 8, caractérisée en ce que le tétrachlorure de titane est ajouté pendant l'étape de chauffage en quantité d'au moins 0,01 mole par mole de tétrachloure de titane contenu dans le solvant mélangé.

10. Méthode selon l'une quelconque des revendications 1 à 9, caractérisée en ce que l'éther organique et/ou le tétrachlorure de titane ajouté(s) pendant l'étape de chauffage est/sont ajouté(s) à une température de 40 à 55°C.

11. Méthode selon l'une quelconque des revendications 1 à 10, caractérisée en ce que l'étape de chauffage est interrompue par un refroidissement temporaire, l'éther organique et/ou le tétrachlorure de titane ajouté(s) pendant l'étape de chauffage est/sont ajouté(s) pendant une période de refroidissement temporaire.

12. Catalyseur caractérisé en ce qu'il comprend un composant catalytique au trichlorure de titane produit par une méthode selon l'une quelconque des revendications 1 à 11 et un composé organo-aluminique.

13. Méthode pour l'homo ou la copolymérisation d'une $\alpha$-oléfine, caractérisée en ce qu'elle comprend la réalisation de la polymérisation en présence d'un catalyseur selon la revendication 12.